# EUROPÄISCHE PATENTANMELDUNG

(11) **EP 3 470 716 A1**
(43) Veröffentlichungstag der Anmeldung: **17.04.2019**
(21) Anmeldenummer: 17196299.6
(22) Anmeldetag: 13.10.2017
(51) Int. Cl.: F16L 5/04, E04B 1/94, H02G 3/04

(54) **BRANDSCHUTZVORRICHTUNG**

(71) Anmelder: HILTI Aktiengesellschaft, 9494 Schaan (LI)
(72) Erfinder: Monden, Thomas, 87778 Stetten (DE); Mordau, Ulf, 86875 Waal (DE)
(74) Vertreter: Hilti Aktiengesellschaft Corporate Intellectual Property

(57) **Zusammenfassung**

Es wird eine Brandschutzvorrichtung (10) zum Abdichten von Wand- oder Deckendurchbrüchen angegeben, aufweisend ein Gehäuse (12), welches eine Gehäusewand (16) und jeweils eine Öffnung an den entgegengesetzten Enden der Gehäusewand (16) aufweist, und eine Dichtung (14), welche eine Öffnung des Gehäuses (12) verschließt, wobei die Dichtung (14) einen Öffnungsbereich (30) aufweist, durch den ein Leitungselement geführt werden kann, und wobei die Dichtung (14) ein flexibles Material (20) und mindestens ein mit dem flexiblen Material (20) fest verbundenes Federelement (22) aufweist.

## Beschreibung

Die vorliegende Erfindung betrifft eine Brandschutzvorrichtung zur Durchführung von Rohren oder Leitungen durch eine Gebäudeöffnung, beispielsweise einen Wand- oder Deckendurchbruch.

Derartige Durchführungen in Wänden oder Decken müssen die geltenden Anforderungen hinsichtlich Brandschutz erfüllen. Das heißt, die Wand- und Deckendurchbrüche müssen in ausreichendem Maß gegen die Weiterleitung von Bränden gesichert sein. Wichtig ist dabei auch eine möglichst dichte Abdichtung gegen Licht, Gas und Wasser.

Es ist bekannt, zu diesem Zweck kastenförmige Gehäuse in die Öffnungen einzusetzen, die einen Durchlasskanal für die zu installierenden Leitungen und Rohre bilden. Solche Gehäuse können in eine Wand oder Decke eingegossen werden. Der Durchlasskanal kann mit einer flexiblen Membran abgedichtet sein, die eine Öffnung zur Durchführung der Leitung aufweist. Solche Systeme sind jedoch häufig unflexibel hinsichtlich der Geometrie und Anzahl der durchzuführenden Leitungen oder bieten nur eine unzureichende Abdichtung.

Es ist daher eine Aufgabe der Erfindung, eine Brandschutzvorrichtung zum Abdichten von Wand- oder Deckendurchbrüchen bereitzustellen, welche Leitungen oder Rohre in unterschiedlicher Anzahl oder mit unterschiedlicher Geometrie aufnehmen kann.

Diese Aufgabe wird erfindungsgemäß gelöst durch eine Brandschutzvorrichtung zum Abdichten von Wand- oder Deckendurchbrüchen, aufweisend ein Gehäuse, welches eine Gehäusewand und jeweils eine Öffnung an den entgegengesetzten Enden der Gehäusewand aufweist, und eine Dichtung, welche eine Öffnung des Gehäuses verschließt, wobei die Dichtung einen Öffnungsbereich aufweist, durch den ein Leitungselement geführt werden kann, und wobei die Dichtung ein flexibles Material und mindestens ein mit dem flexiblen Material fest verbundenes Federelement aufweist. Unter dem Begriff "Gehäuse" der vorliegenden Erfindung kann auch eine Membran, insbesondere ein Membranschlauch verstanden werden, der direkt auf die Wand- oder Deckenöffnung montiert werden kann.

Aufgrund der Flexibilität der Dichtung ist die Brandschutzvorrichtung geeignet, eine flexible Anzahl an Leitungen oder Rohren mit unterschiedlicher Geometrie aufzunehmen. Die Dichtung ist insbesondere derart ausgebildet, dass sie sich flexibel an die Geometrie von Leitungen oder Rohren anpassen kann. Das mit dem flexiblen Material verbundene Federelement sorgt dafür, dass die Dichtung mit einem ausreichenden Druck an die jeweilige Leitung gedrückt wird, um eine zuverlässige Abdichtung zu gewährleisten. Auch kleine Zwischenräume, die sich zwischen nahe zueinander positionierten Leitungen ergeben, können ordentlich abgedichtet werden.

Der Öffnungsbereich ist insbesondere derart ausgebildet, dass er eine variable Anzahl an Leitungen aufzunehmen kann. Beispielsweise ist der Öffnungsbereich als länglicher Schlitz ausgebildet, in dem mehrere Leitungen nebeneinander positioniert werden können.

Das Federelement ist beispielsweise kammförmig ausgebildet. Insbesondere kann das Federelement einen Verbindungsabschnitt und mehrere Federarme aufweisen, wobei die Federarme an dem Verbindungsabschnitt befestigt sind. Gegebenenfalls können die einzelnen Federarme auch einzeln in ein Gehäuse eingesetzt werden, somit dient das Gehäuse als Verbindungselement für die Einzelfedern. Das Federelement kann auf diese Weise für eine zuverlässige Abdichtung sorgen. In einem Bereich, in dem keine Leitung angeordnet ist, sorgen die Federarme dafür, dass die Dichtung, insbesondere der Öffnungsbereich, geschlossen bleibt. Dort, wo eine Leitung vorhanden ist, wird die Dichtung aufgrund der Federarme fest gegen die Leitung gedrückt.

Die Federarme verlaufen vorzugsweise parallel zueinander. Je nach Anwendungsfall und Größe des Durchbruchs können die Anzahl und die Dimension der Federarme variieren. Beispielsweise kann das Federelement mindestens zehn Federarme aufweisen.

Gemäß einer bevorzugten Ausführungsform weist die Dichtung Falten auf. Alternative kann auch kann auch ein Material mit einer entsprechenden Dehnfähigkeit verwendet werden um die Zwischenräume abzudichten. Dadurch weist die Dichtung einen Materialüberschuss auf, der die Flexibilität der Dichtung zusätzlich verbessert. Enge Zwischenräume zwischen zwei benachbarten Leitungen können infolgedessen noch besser abgedichtet werden.

Vorzugsweise ist in jeder Falte der Dichtung ein Federarm des Federelements angeordnet. Infolgedessen ist das flexible Material gleichmäßig entlang einer Längsrichtung der Dichtung verteilt und entlang dem Öffnungsbereich ist an jeder Stelle genug flexibles Material für eine optimale Dichtwirkung vorhanden.

Die Dichtung kann im Öffnungsbereich eine Überlappung aufweisen. Aufgrund der Überlappung kann ein Strömungsweg durch den Öffnungsbereich verlängert sein. Dies gewährleistet eine besonders gute Abdichtung im Öffnungsbereich.

Um die Abdichtung im Öffnungsbereich zusätzlich zu verbessern, kann die Dichtung im Bereich der Überlappung eine Stufe aufweisen. Dadurch entsteht ein sogenannter Labyrintheffekt, das heißt, der Strömungswiderstand der Dichtung ist erhöht.

Um die Dichtung im Öffnungsbereich an eine Geometrie der Leitungen anzupassen, kann die Dichtung eine Aussparung aufweisen. Dadurch können Leitungen und Rohre leichter durch die Dichtung geführt werden. Eine solche Aussparung bietet sich beispielsweise bei runden Brandschutzvorrichtungen an, die zur Durchführung von lediglich einer Leitung vorgesehen sind.

Beispielsweise weist die Dichtung Fasern auf, welche den Öffnungsbereich hineinragen. Die Fasern können sich besonders flexibel an Leitungen anlegen. Insbesondere können die Fasern auch in kleinste Zwischenräume gelangen und somit auch bei mehreren in engem Abstand nebeneinander angeordneten Leitungen für eine sichere Abdichtung sorgen. Die Fasern können als Borsten oder Fransen ausgebildet sein. Insbesondere weist die Dichtung eine Vielzahl von Fasern auf, beispielsweise mehrere Tausend. Beispielsweise sind die Fasern als Glasfasern, Keramikfasern und/oder Metallfasern ausgebildet.

Um eine sichere und dauerhafte Verbindung des Federelements mit dem flexiblen Material der Dichtung zu gewährleisten, kann das Federelement auf das flexible Material aufgeklebt oder aufgenäht oder in das flexible Material eingenäht oder eingegossen sein.

Das flexible Material weist beispielsweise ein Gewebe, ein Gelege, ein Gitter und/oder ein dehnfähiges Material auf oder besteht aus einem solchen Material. Die Dichtung kann sich infolgedessen besonders gut an verschiedene Leitungsgeometrien anpassen.

Die Dichtung kann einteilig oder mehrteilig ausgeführt sein. Insbesondere das flexible Material der Dichtung kann einteilig oder mehrteilig sein.

Bei einer einteiligen Dichtung kann der Öffnungsbereich besonders einfach realisiert werden, indem ein länglicher Schnitt in das flexible Material gemacht wird. Bei einer mehrteiligen Dichtung kann eine Überlappung im Öffnungsbereich realisiert werden, indem die einzelnen Teile übereinander gelegt werden.

Um die Anforderungen hinsichtlich Brandschutz zu erfüllen, kann das flexible Material ein feuerfestes Material sein, insbesondere aus Glasfasern, Keramikfasern und/oder Metallfasern bestehen. Um eine Dichtigkeit nur gegen Licht, Gas oder Wasser zu erreichen, ist ein feuerfestes Material nicht zwingend notwendig.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 schematisch eine erfindungsgemäße Brandschutzvorrichtung mit einem Dichtelement,
- Figur 2 eine weitere Brandschutzvorrichtung,
- Figur 3 eine Dichtung mit einer Überlappung und
- Figur 4 einen Längsschnitt durch ein Dichtelement.

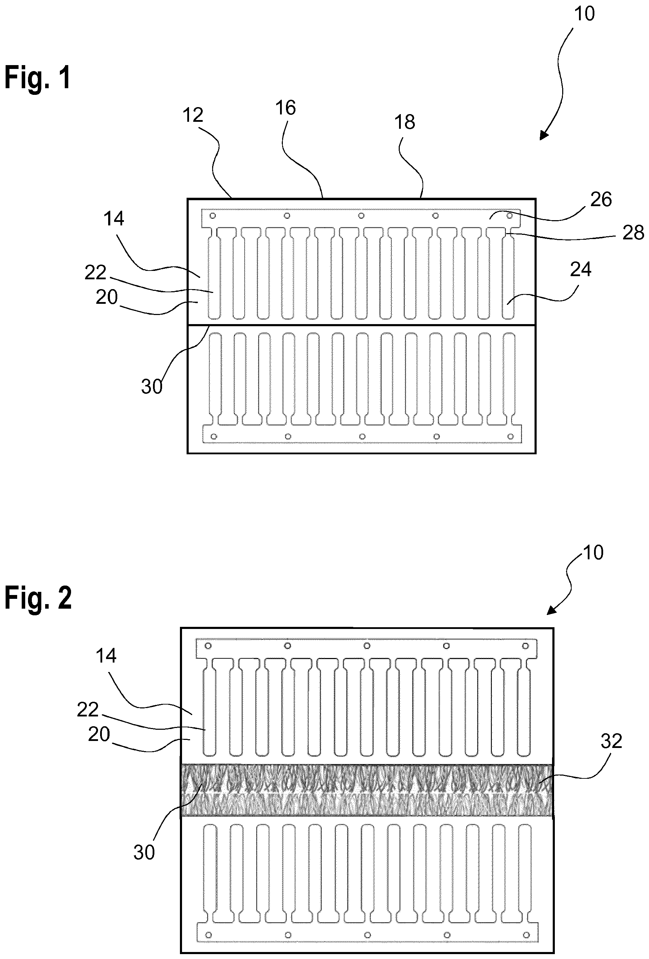

Figur 1 zeigt schematisch eine Brandschutzvorrichtung 10 in einer Draufsicht. Die Brandschutzvorrichtung weist ein Gehäuse 12 und eine in dem Gehäuse 12 angeordnete Dichtung 14 auf. Das Gehäuse weist eine Gehäusewand 16 und jeweils eine Öffnung an den entgegengesetzten Enden der Gehäusewand 16 auf. Beispielsweise ist die Dichtung 14 an einem umlaufenden Rand 18 einer Gehäuseöffnung befestigt und verschließt die Öffnung vollständig. In der gezeigten Ausführungsform ist das Gehäuse 12 rechteckig ausgebildet, allerdings sind runde oder anders geformte Gehäuse ebenso möglich. Um die Positionierung des Gehäuses 12 in einem Wand- oder Deckendurchbruch zu vereinfachen, kann das Gehäuse 12 einen (nicht dargestellten) umlaufenden Flansch aufweisen.

Die Dichtung 14 weist ein flexibles Material 20 und ein Federelement 22 auf.

Das flexible Material weist beispielsweise ein Gewebe, ein Gelege, ein Gitter und/oder ein dehnfähiges Material auf. Insbesondere ist das flexible Material ein feuerfestes Material, das aus Glasfasern, Keramikfasern und/oder Metallfasern besteht.

Das Federelement 22 besteht beispielsweise aus Federstahl. Dadurch kann das Federelement 22 für eine ausreichende Anpresskraft der Dichtung 14 an eine Leitung sorgen, um eine sichere Abdichtung zu gewährleisten. Das Federelement 22 ist vorzugsweise kammförmig ausgebildet. Insbesondere weist das Federelement 22 eine Vielzahl von Federarmen 24 auf, die an einem Verbindungsabschnitt 26 befestigt sind. Dabei schließen die Federarme 24 jeweils einen rechten Winkel mit dem Verbindungsabschnitt 26 ein. Die Federarme 24 sind unabhängig voneinander bewegbar. Am Übergang der Federarme 24 zum Verbindungsabschnitt 26 weisen die Federelemente 24 jeweils eine Einschnürung 28 auf. Die Einschnürung 28 sorgt dafür, dass die Federarme 24 leichter ausgelenkt werden können. Die Federarme 24 können nach oben und unten ausgelenkt werden, also in eine Richtung senkrecht zur Zeichenebene.

Die Begriffe "unten" und "oben" beziehen sich dabei auf einen Zustand, in dem die Brandschutzvorrichtung 10 in einer Decke montiert ist.

Das Federelement 22 ist beispielsweise auf das flexible Material 20 aufgeklebt oder aufgenäht oder in das flexible Material 20 eingenäht oder eingegossen. So kann das Federelement 22 zuverlässig mit dem flexiblen Material verbunden sein. Das Federelement 22 in Figur 1 ist an einer Oberseite der Dichtung 14 angeordnet. Es ist jedoch genauso möglich, das Federelement 22 an der Unterseite der Dichtung 14 anzubringen.

In der Mitte der Dichtung 14 ist ein Öffnungsbereich 30 angeordnet. Im einfachsten Fall ist der Öffnungsbereich 30 als länglicher Schlitz im flexiblen Material 20 ausgebildet. Bei der in Figur 1 dargestellten Ausführungsform ist die Dichtung 14 durch den Öffnungsbereich 30, insbesondere den Schlitz, zweigeteilt.

Durch den Öffnungsbereich 30 können Leitungen oder Rohre durch die Brandschutzvorrichtung 10 hindurch geführt werden. Dabei werden das flexible Material 20 und die Federarme 24 zur Seite gedrückt. Aufgrund der Spannkraft der Federarme 24 wird die Dichtung 14 jedoch fest gegen die Leitungen gedrückt, sodass eine besonders zuverlässige Abdichtung der Brandschutzvorrichtung 10 gewährleistet ist.

Figur 2 zeigt eine alternative Ausführungsform einer Brandschutzvorrichtung 10. Die in Figur 2 gezeigte Brandschutzvorrichtung 10 weist dieselben Komponenten auf wie die in Zusammenhang mit Figur 1 beschriebene Brandschutzvorrichtung 10. Zusätzlich weist die Dichtung 14 gemäß Figur 2 Fasern 32 auf, die in den Öffnungsbereich 30 der Dichtung 14 hineinragen. Diese können selbst in kleinste Zwischenräume zwischen zwei nebeneinander angeordneten Leitungen gelangen und für eine besonders sichere Abdichtung sorgen. Die Fasern 32 können als Glasfasern, Keramikfasern und/oder Metallfasern ausgebildet sein.

Die Länge der Fasern 32 kann derart bemessen sein, dass die Fasern 32 in der Mitte des Öffnungsbereichs 30 zumindest teilweise überlappen.

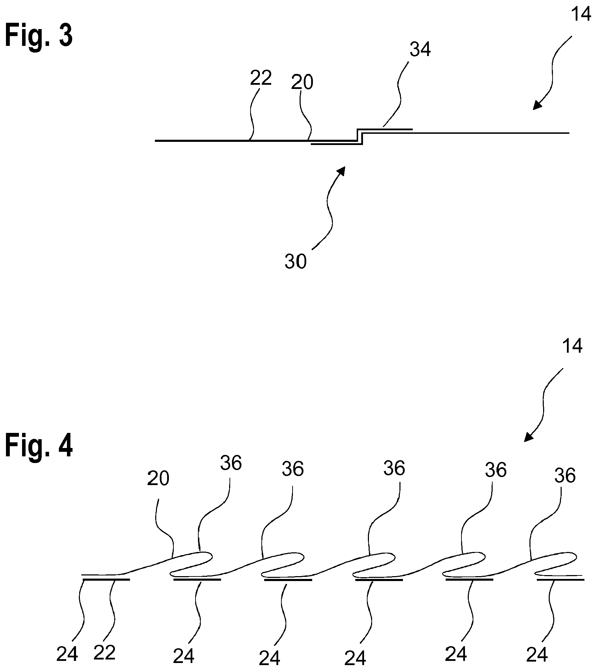

Figur 3 zeigt schematisch einen Querschnitt durch eine Dichtung 14. Der Einfachheit halber sind das flexible Material 20 und das Federelement 22 einteilig dargestellt.

Im Öffnungsbereich 30 weist die Dichtung 14 eine Überlappung 34 auf. In der gezeigten Darstellung ist die Dichtung 14 im Bereich der Überlappung 34 stufenförmig ausgebildet. Die Dichtung 14 kann im Bereich der Überlappung 34 aber auch geradlinig ausgebildet sein.

Durch die Überlappung 34 wird ein Weg, den ein flüssiges oder gasförmiges Medium, beispielsweise Wasser oder Rauch, durch die Dichtung 14 zurücklegen muss, deutlich erhöht. Dies wirkt sich positiv auf die Dichteigenschaften der Dichtung 14 aus. Insbesondere ist der Strömungswiderstand der Dichtung 14 im Vergleich zu einer Dichtung 14 ohne Überlappung 34 erhöht.

Figur 4 zeigt schematisch einen Längsschnitt durch eine Dichtung 14, wobei das flexible Material 20 und mehrere Federarme 24 des Federelements 22 dargestellt sind. Die Federarme 24 sind in gleichmäßigen Abständen an dem flexiblen Material 20 befestigt. Zwischen den Federarmen 24 ist das flexible Material 20 in Falten 36 gelegt. Das flexible Material 20 weist daher in Längsrichtung eine Überlänge auf. Durch die Falten 36 kann gewährleistet werden, dass an jeder Stelle entlang dem Öffnungsbereich 30 genug flexibles Material 20 vorhanden ist, um einen Deckendurchbruch zuverlässig abzudichten.

## Patentansprüche

1. Brandschutzvorrichtung (10) zum Abdichten von Wand- oder Deckendurchbrüchen, aufweisend ein Gehäuse (12), welches eine Gehäusewand (16) und jeweils eine Öffnung an den entgegengesetzten Enden der Gehäusewand (16) aufweist, und eine Dichtung (14), welche eine Öffnung des Gehäuses (12) verschließt, wobei die Dichtung (14) einen Öffnungsbereich (30) aufweist, durch den ein Leitungselement geführt werden kann, und wobei die Dichtung (14) ein flexibles Material (20) und mindestens ein mit dem flexiblen Material (20) fest verbundenes Federelement (22) aufweist.

2. Brandschutzvorrichtung (10) nach Anspruch 1, **dadurch gekennzeichnet, dass** das Federelement (22) kammförmig ausgebildet ist.

3. Brandschutzvorrichtung (10) nach einem der vorhergehenden Ansprüche **dadurch gekennzeichnet, dass** die Dichtung (14) Falten (36) aufweist.

4. Brandschutzvorrichtung (10) nach einem der vorhergehenden Ansprüche, **dadurch gekennzeichnet, dass** das die Dichtung (14) im Öffnungsbereich (30)eine Überlappung (34) aufweist.

5. Brandschutzvorrichtung (10) nach einem der Ansprüche 1 bis 3, **dadurch gekennzeichnet, dass** die Dichtung (14) im Öffnungsbereich (30) eine Aussparung aufweist.

6. Brandschutzvorrichtung (10) nach einem der vorhergehenden Ansprüche, **dadurch gekennzeichnet, dass** die Dichtung (14) Fasern (32) aufweist, in den Öffnungsbereich (30) hineinragen.

7. Brandschutzvorrichtung (10) nach einem der vorhergehenden Ansprüche, **dadurch gekennzeichnet, dass** das Federelement (22) auf das flexible Material (20) aufgeklebt oder aufgenäht oder in das flexible Material (20) eingenäht oder eingegossen ist.

8. Brandschutzvorrichtung (10) nach einem der vorhergehenden Ansprüche, **dadurch gekennzeichnet, dass** das flexible Material (20) ein Gewebe, ein Gelege, ein Gitter und/oder ein dehnfähiges Material aufweist oder aus einem solchen Material besteht.

9. Brandschutzvorrichtung (10) nach einem der vorhergehenden Ansprüche, **dadurch gekennzeichnet, dass** die Dichtung (14) einteilig oder mehrteilig ist.

10. Brandschutzvorrichtung (10) nach einem der vorhergehenden Ansprüche, **dadurch gekennzeichnet, dass** das flexible Material (20) ein feuerfestes Material ist, insbesondere aus Glasfasern, Keramikfasern und/oder Metallfasern besteht.
